# EUROPEAN PATENT APPLICATION

(11) **EP 2 293 639 A1**
(43) Date of publication of application: **09.03.2011**
(21) Application number: 09770076.9
(22) Date of filing: 18.06.2009
(51) Int. Cl.: H04W 72/12, H04W 16/10

(54) **BASE STATION APPARATUS AND METHOD**

(30) Priority: 23.06.2008 JP 2008163844
(71) Applicant: NTT DOCOMO, INC., Tokyo 100-6150 (JP)
(72) Inventor: KAWAMURA, Teruo, Tokyo 100-6150 (JP); KISHIYAMA, Yoshihisa, Tokyo 100-6150 (JP); SAWAHASHI, Mamoru, Tokyo 100-6150 (JP)
(74) Representative: HOFFMANN EITLE
(86) International application number: PCT/JP2009/061124
(87) International publication number: WO 2009/157366

(57) **Abstract**

A base station apparatus includes a communication unit configured to communicate with base stations of a plurality of adjacent cells; a management unit configured to manage frequency bands for use in the adjacent cells; and a determination unit configured to determine instruction contents according to status of use of the frequency bands. The instruction contents are reported to all or a part of the adjacent cells via the communication unit. The instruction contents specify: a type of a pilot channel transmitted by a user residing in an adjacent cell; whether pilot channels of each user are code-division multiplexed or not; and whether pilot channels of each user are frequency-division multiplexed or not, and the like.

## Description

### TECHNICAL FIELD

The present invention relates to a technical field of mobile communications. More particularly, the present invention relates to a base station apparatus and a method employing next-generation mobile communication technologies.

### BACKGROUND ART

In this kind of technical field, successors to the so-called third-generation mobile communication system are being discussed by 3GPP, a standardization group for the wideband code division multiple access (W-CDMA) scheme. In particular, not only Long Term Evolution (LTE) but also further succeeding mobile communication schemes are being discussed, as successors of the W-CDMA scheme, the high speed downlink packet access (HSDPA) scheme, and the high speed uplink packet access (HSUPA) scheme and the like. Examples of successors to the system of the LTE scheme include an IMT-advanced system, an LTE-advanced system, or a fourth-generation mobile communication system, or the like.

The downlink radio access scheme in the LTE system is an orthogonal frequency division multiplexing (OFDM) scheme. A single-carrier frequency division multiple access (SC-FDMA) scheme is to be used as an uplink radio access scheme. However, in other systems, a multicarrier scheme may be used for the uplink.

The OFDM scheme is a multicarrier transmission scheme where a frequency band is divided into multiple narrow frequency bands (subcarriers) and data are transmitted on the subcarriers. The subcarriers are orthogonalized and densely arranged along the frequency axis to achieve high-speed transmission and improve frequency use efficiency

The SC-FDMA scheme is a single carrier transmission scheme where a frequency band is divided into multiple frequency bands for each terminal in a Fourier-transformed frequency domain so that a plurality of terminals can use different frequency bands. The SC-FDMA scheme makes it possible to easily and effectively reduce interference between terminals as well as to reduce variation of the transmission power. Thus, the SC-FDMA scheme is preferable to reduce power consumption of terminals and to achieve wide coverage. The SC-FDMA scheme corresponds to a scheme in which signal mapping positions are limited to continuous frequency bands using a DFT-spread OFDM scheme, for example, or corresponds to a scheme in which a signal is mapped at regular intervals like a comb-shape in the frequency domain. Use of the FDMA of single carrier scheme for uplink is disclosed, for example, in the non-patent document 1.

In a system such as LTE and the like, one or more resource blocks (RB) or resource units (RU) are allocated to a user apparatus both in downlink and uplink communications. Resource blocks are shared by multiple user apparatuses in the system.
In LTE, the base station apparatus determines a user apparatus, among a plurality of user apparatuses, to which resource blocks are to be assigned every subframe which is lms. The subframe may also be called a transmission time interval (TTI). The determination of assignment of radio resources is called scheduling. In the downlink, the base station apparatus transmits a shared data channel using one or more resource blocks to a user apparatus selected in the scheduling. This shared data channel is called a physical downlink shared channel (PDSCH). In the uplink, a user apparatus selected in the scheduling transmits a shared channel to the base station apparatus using one or more resource blocks. This shared channel is called a physical uplink shared channel (PUCCH).

In a communication system employing the shared channels, it is necessary to signal (or report) information indicating which user apparatus is assigned the shared channel in each subframe basically. A control channel used for the signaling is called a physical downlink control channel (PDCCH) or a downlink L1/L2 control channel. A downlink control signal may include, in addition to the PDCCH, a physical control format indicator channel (PCFICH) and a physical hybrid ARQ indicator channel (PHICH), and the like.

The PDCCH, for example, includes the following information (see, for example, the non-patent document 2):
- Downlink scheduling grant
- Uplink scheduling grant
- Overload indicator
- Transmission power control command bit

The downlink scheduling information may include information regarding a downlink shared channel, for example. More particularly, the downlink scheduling information may include downlink resource block assignment information, identification information of a user apparatus (UE-ID), the number of streams, information regarding precoding vectors, data sizes, modulation schemes, and information regarding hybrid automatic repeat request (HARQ).

The uplink scheduling grant may include information regarding an uplink shared channel, for example. More particularly, the uplink scheduling grant includes uplink resource assignment information, identification information of a user apparatus (UE-ID), data sizes, modulation schemes, uplink transmission power information, and information regarding a demodulation reference signal used in uplink MIMO, and the like.

The PCFICH is used to report the format of the PDCCH. More specifically, the PCFICH is used to report the number of OFDM symbols to which the PDCCH is mapped. In LTE, the number of OFDM symbols to which the PDCCH is mapped is one, two, or three.

The PDCCH is mapped a top OFDM symbol of the subframe in order.

The PHICH includes acknowledgement/negative-acknowledgement information (ACK/NACK) indicating whether retransmission is necessary for the PUSCH transmitted via uplink. The PHICH indicates acknowledgement or negative acknowledgement for each transmission unit such as a packet and therefore can be basically represented by one bit. Thus, it is not advantageous for radio transmission as it is. Therefore, PHICHs for multiple users are combined to form multi-bit information and the multi-bit information is multiplexed and spread by a code-division-multiplexing scheme and is transmitted by radio.

As a matter of definition of terms, PDCCH, PCFICH, and PHICH may be defined as independent channels in the downlink control signal respectively, or PDCCH may be defined to include PCFICH and PHICH.

In the uplink, the PUSCH is used to transmit user data (a normal data signal) and control information accompanying the user data. Also, separately from the PUSCH, a physical uplink control channel (PUCCH) is provided to transmit, for example, a downlink channel quality indicator (CQI) and acknowledgement information (ACK/NACK) for the PDSCH. The CQI is used, for example, for scheduling processing and adaptive modulation and channel coding (AMC) processing of the physical downlink shard channel. In the uplink, a random access channel (RACH) and signals indicating assignment requests for uplink and downlink radio resources may also be transmitted as necessary.

### [RELATED ART DOCUMENT]

[Non-patent document 1] 3GPP TR 25.814 (V7.0.0) "Physical Layer Aspects for Evolved UTRA", June 2006
[Non-patent document 2] 3GPP R1-070103, "Downlink L1/L2 Control Signaling Channel Structure: Coding", January 15-19, 2007

### SUMMARY OF THE INVENTION

### PROBLEM TO BE SOLVED BY THE INVENTION

By the way, the scheduling and the AMC method are performed based on a radio channel state, and, an estimated radio channel state is used for restoring the control channel and the data channel. Therefore, it is very important to exactly ascertain the radio channel state for improving throughput by performing scheduling and the AMC method. To exactly ascertain the radio channel state is necessary not only for the uplink but also for the downlink. However, from the viewpoint of maximum transmission power, deterioration of channel estimation accuracy in the uplink for transmission from the user terminal is more feared than that in the downlink for transmitting signal from the base station. Especially, deterioration of channel estimation accuracy in the uplink for users at a cell edge is feared.

An object of the present invention is to improve channel estimation accuracy in the uplink for users at the cell edge.

### MEANS FOR SOLVING THE PROBLEM

In an embodiment of the present invention, a base station apparatus in a mobile communication system is used. The base station apparatus includes a communication unit configured to communicate with base stations of a plurality of adjacent cells; a management unit configured to manage frequency bands for use in the adjacent cells; and a determination unit configured to determine instruction contents according to status of use of the frequency bands. The instruction contents are reported to all or a part of the adjacent cells via the communication unit. The instruction contents specify: a type of a pilot channel transmitted by a user residing in an adjacent cell; whether pilot channels of each user are code-division multiplexed or not; and whether pilot channels of each user are frequency-division multiplexed or not, and the like.

### EFFECT OF THE PRESENT INVENTION

According to an embodiment of the present invention, channel estimation accuracy in the uplink for users at the cell edge can be improved.

### BRIEF DESCRIPTION OF THE DRAWINGS

Fig. 1 is a diagram showing an example of comparison of orthogonality of inner-cell and inter-cell signals for each of three systems;
Fig. 2 is a diagram showing outline of the system used in an embodiment of the present invention;
Fig. 3 is a diagram showing a frequency use situation example;
Fig. 4 is a diagram showing an example of an uplink control channel;
Fig. 5 is a conceptual diagram of a frequency division multiplexing scheme;
Fig. 6 is a conceptual diagram of another frequency division multiplexing scheme;
Fig. 7 is a flowchart showing an operation example according to an embodiment of the present invention; and
Fig. 8 shows a schematic block diagram of the central base station of an embodiment of the present invention.

### EMBODIMENTS FOR CARRYING OUT THE INVENTION

A base station apparatus (central BS) in an embodiment of the present invention includes: a communication unit (I/F) configured to communicate with base stations (remote BS) of a plurality of adjacent cells; and a management unit (82) configured to manage frequency bands for use in the adjacent cells. Instruction contents are determined according to status of use of the frequency bands. The instruction contents are reported to all or a part of the adjacent cells via the communication unit. The instruction contents specify: a type of a pilot channel transmitted by a user residing in an adjacent cell; whether pilot channels of each user are code-division multiplexed or not; and whether pilot channels of each user are frequency-division multiplexed or not. By determining the "instruction contents" such that interference between adjacent cells becomes small, inter-cell interference can be effectively suppressed especially at the cell edge.

The management unit may manage frequency bands such that cell-edge users residing in adjacent cells use frequency bands that do not overlap with each other. By partially restricting use of frequency bands in each cell, inter-cell interference can be effectively suppressed, and throughput for the cell edge users can be improved.

The pilot channel may be represented by an orthogonal code sequence. By orthogonalizing pilot channels of each user, channel estimation accuracy can be improved.

The pilot channel may be a sounding reference signal (SRS) transmitted using a band for an uplink shared data channel, a demodulation reference signal (DRS) associated with the uplink shared data channel, or a reference signal (RS in PUCCH) transmitted using a band prepared for a control signal separately from the band for the uplink shared data channel.

The central base station may further include: a unit configured to manage synchronization status such that, in each of the base stations of the adjacent cells, the pilot channel from the user apparatus is received within a predetermined guard interval.

For the sake of convenience of explanation, the embodiment of present invention is described by being divided to some items. But, classification into each item is not essential in the present invention, and features described in equal to or more than two items may be combined and used as necessary. While specific numerical value examples are used to facilitate understanding of the present invention, such numerical values are merely examples, so that any appropriate value may be used unless specified otherwise.

An embodiment of the present invention is described in terms of the following items.
A. Inter-cell orthogonalization
B. System
C. Pilot channel
D. Multiplexing method
E. Operation
F. Base station apparatus

### [Embodiment 1]

### <A. Inter-cell orthogonalization>

As mentioned above, the object of the present invention is to improve channel estimation accuracy in the uplink for a user at a cell edge. Regarding this point, in basic research of the present invention, inventors of the present invention focused attention on orthogonality of inner-cell signals and inter-cell signals. In the present application, "two signals are orthogonal" includes meaning that the two signals can be separated. For example, when two signals are multiplexed by a frequency division multiplexing scheme, the two signals are orthogonal.

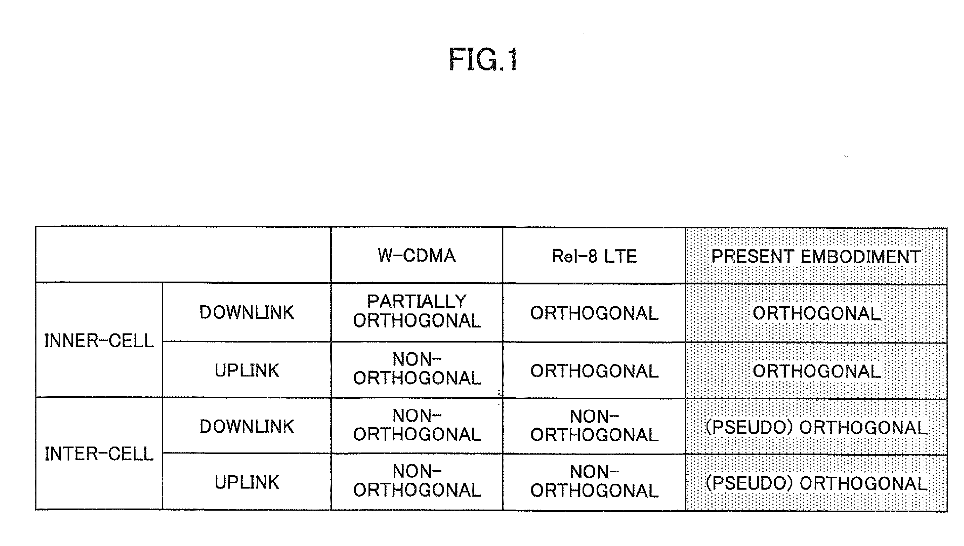

Fig. 1 shows an example of comparison of orthogonality of inner-cell and inter-cell signals for each of three systems. "W-CDMA" indicates a system of the so-called third generation wideband CDMA scheme. "Rel-8 LTE" is a system of the LTE scheme which is based on the standard specification defined in the release 8. "Present embodiment" indicates a system of the present embodiment.

In the downlink of the W-CDMA scheme, signals in a cell are orthogonal using a spreading code of OVSF (Orthogonal Variable Spreading Factor). In multipath propagation environment, signals in a path going through the same propagation route are orthogonal with each other. But, as to signals between paths passing through different propagation routes, orthogonality breaks. Therefore, the orthogonality is referred to as "partially orthogonal" instead of completely orthogonal. In the uplink of the W-CDMA scheme, a user specific scramble code is used, and each uplink signal is transmitted in a nonorthogonal state.

In the LTE scheme, signals are orthogonal with each other in both of the uplink and the downlink. For example, in the downlink, the OFDM scheme is used, and signals of each user are orthogonal with each other by the FDMA scheme. In the uplink, an orthogonal multiplexing method using an orthogonal code sequence is used in addition to an orthogonal multiplexing method of the frequency domain.

Inter-cell signals are nonorthogonal with each other in both of the W-CDMA scheme and the LTE scheme. Therefore, if inter-cell signals can be orthogonalized while orthogonalizing inner-cell signals with each other, signal quality can be improved, and as a result, throughput can be improved. Under such consideration, inventors of the present invention focused attention on orthogonalization of inter-cell signals.

### <B. System>

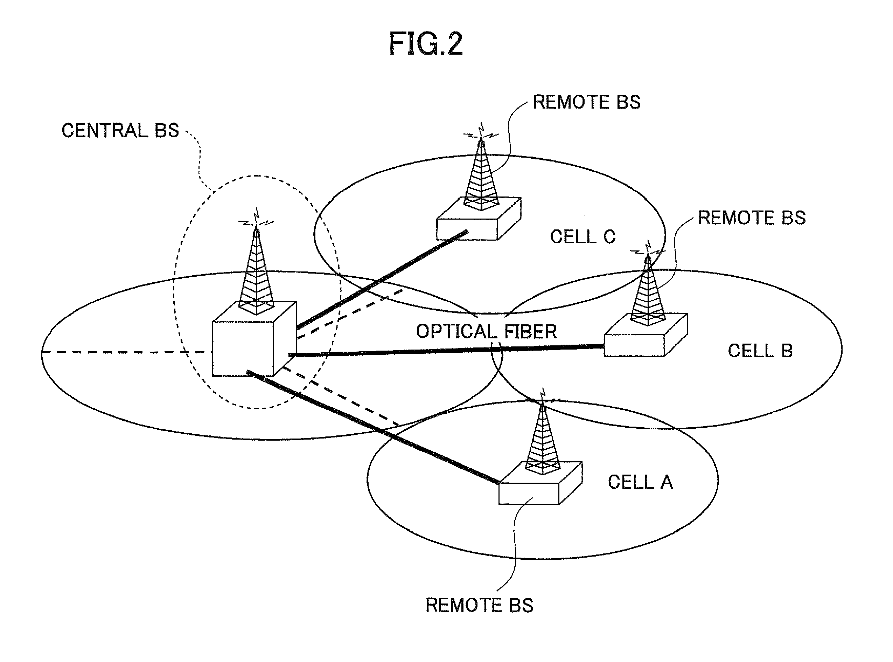

Fig. 2 shows an outline of the system for use in an embodiment of the present invention. The system includes a plurality of cells. Each cell includes a base station and a user apparatus (which is not shown in the figure). One of the plurality of base stations is referred to as "central control base station" or "central base station" (for the sake of convenience of drawing, it is shown as "central BS"). Other base stations are referred to as remote base stations (each of them is shown as "remote BS" in the figure). The central base station is connected to a plurality of remote base stations via some sort of communication medium. The communication medium is an optical fiber as example. But, it may be an electrical cable, or may be any signal transmission medium which is known and appropriate in the technical field. The central base station manages the remote base station in terms of predetermined matters. The predetermined matters are a frequency band used in a cell edge, communication timing (synchronization), types of pilot channel, whether pilot channels of each user are code-division multiplexed or not, whether pilot channels of each user are frequency-division multiplexed or not, and the like. The predetermined matters are also referred to as "instruction contents", which are reported to the remote base station by the central base station as appropriate.

In this system, it is assumed that the frequency band usable in each cell is restricted such that users at a cell edge can use different frequencies which are different with each other between adjacent cells. However, the present invention can be also applied to a case where such frequency band limitation is not performed at the cell edge.

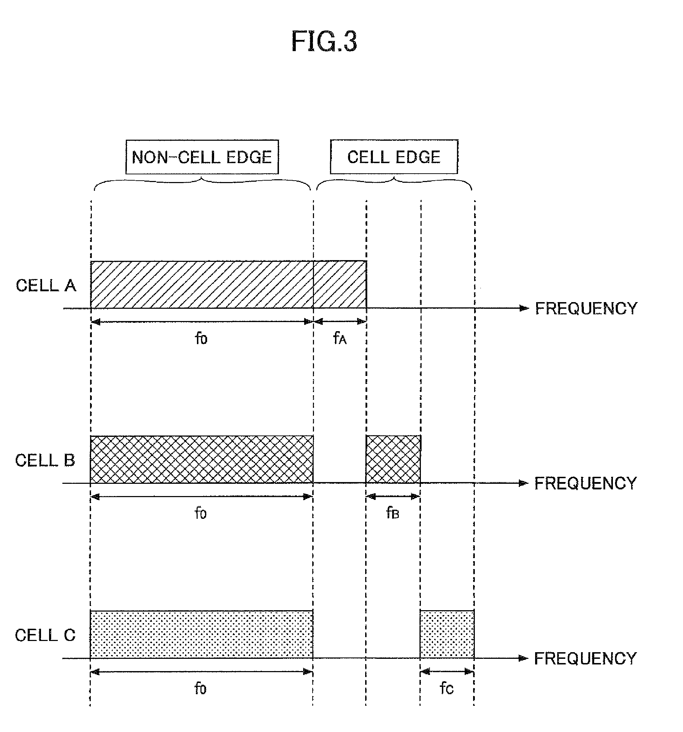

Fig. 3 shows a frequency use situation example having constraints as mentioned above. Each cell may use a frequency band indicated as "f₀" near the base station of the cell. However, communication of a data channel at a cell edge of the cell A is restricted to the frequency band indicated as "f_{A}". At the cell edge of the cell A, it is prohibited to communicate a data channel using frequency bands of "f_{B}" and "f_{C}". In the same way, communication of a data channel at a cell edge of the cell B is restricted to the frequency band indicated as "f_{B}". At the cell edge of the cell B, it is prohibited to communicate a data channel using frequency bands of "f_{A}" and "f_{C}". Communication of a data channel at a cell edge of the cell C is restricted to the frequency band indicated as "f_{C}". At the cell edge of the cell C, it is prohibited to communicate a data channel using frequency bands of "f_{A}" and "f_{B}". Accordingly, by restricting the frequency band usable for the cell edge user, signal quality for the cell edge user can be improved. The number of cells and the number of frequency divisions are mealy examples, and any interference coordination may be performed.

By the way, the mobile communication environment changes over time. Therefore, the frequency band prohibited to use in each cell (especially, at the cell edge of each cell) (f_{B}, f_{C} in cell A, for example) may be changed according to the communication situation. From this viewpoint, it is preferable to measure the channel state and report it to the central base station for the frequency band prohibited to use in each cell. This means that, for example, a user apparatus transmits a pilot channel using a frequency band of "f_{B}" or "f_{C}" in the cell A. However, when a signal is transmitted using the frequency band of "f_{B}" or "f_{C}" in the cell A, communication is disturbed in cells B and C. In particular, there is a fear that channel estimation accuracy for cell edge users in the cells B and C deteriorates due to the pilot channel from the cell A. In this case, channel estimation in each of cells B and C indicates a state worse than an actual radio channel state. There is fear that this fact largely affects signal processing to be performed after that based on channel estimation.

In the present embodiment, for addressing such fear effectively, pilot channels of each user are multiplexed so as to be orthogonalized with each other, and the multiplexing method is managed by the central base station, and is reported to the remote base station as the instruction contents.

### <C. Pilot channel>

In the present embodiment, the central base station and one or more remote base stations form a base station group. Each base station appropriately adjusts transmission timing of the user apparatus such that receiving timing of an uplink signal falls within a predetermined period. The predetermined period may be set to be a guard interval (or a period of a cyclic prefix), for example. The central base station reports instruction contents to one or more base stations of the base station group such that the user apparatus transmits the pilot channel using an instructed method. For example, the central base station may provide the instruction only to two cells where inter-cell interference is particularly worried. Or, the central base station may report instruction contents to every cell.

In the following, one or more remote base stations receiving such instruction, central base station and a user apparatus communicating with these are mainly described. The user apparatus residing in each cell transmits the pilot channel using the uplink. The pilot channel used in the present embodiment is formed by an orthogonal code sequence. As an example, the orthogonal code sequence is a CAZAC (Constant Amplitude Zero AutoCorrelation) code sequence. The CAZAC code sequences before and after cyclically shifted using the same code sequence are orthogonal with each other. By using the CAZAC code sequence for the pilot channel, many pilot channels that are orthogonal with each other can be prepared easily.

The pilot channel specified in the uplink may be a sounding reference signal (SRS) that is transmitted using a band for the data channel or may be a pilot channel for demodulation (Demodulation RS) associated with the data channel. Or, a pilot channel transmitted using a band dedicated for a control channel, separately form the band for the data channel (and code sequence used for control information data transmission) may be specified.

The control channel transmitted using the dedicated band may be referred to as PUCCH. In anyway, the pilot channel specified from the central base station is reported to each user apparatus via the remote base station, so that each user apparatus transmits the specified pilot channel at appropriate transmission timing.

### <D. Multiplexing method>

Pilot channels transmitted by each user apparatus may be multiplexed using other method instead of or in addition to the code multiplexing method by cyclic shifting of the CAZAC code sequence. For example, it is assumed that a pilot channel in PUCCH is specified.

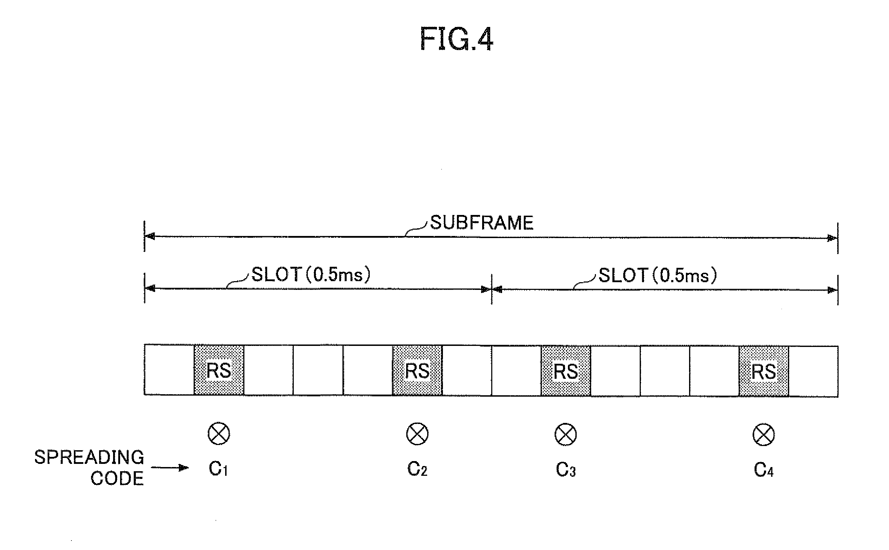

As shown in Fig. 4, it is assumed that PUCCH transmits the pilot channel (RS) at four positions in one subframe. Code multiplexing of spreading factor of 4 (maximum multiplexing number is 4) can be realized by multiplying each of the 4 positions by a factor representing a code. Or, code multiplexing of spreading factor of 2 (maximum multiplexing number is 2) may be realized for each slot of 0.5 ms. By the way, as to the positions where the factor of the code is multiplied, not only two positions in the slot shown in the figure (4 positions in the whole subframe) but also all of the 14 positions may be used in the whole subframe.
Code multiplexing can be used not only for PUCCH but also for a case in which the pilot channel is mapped to a plurality of timings in terms of time. For example, such code multiplexing may be applied to the demodulation pilot channel.

The pilot channels from each user may be multiplexed not only by the code division multiplexing scheme but also by the frequency division multiplexing scheme. In general, there are a localized scheme and a distributed scheme in the frequency division multiplexing scheme.

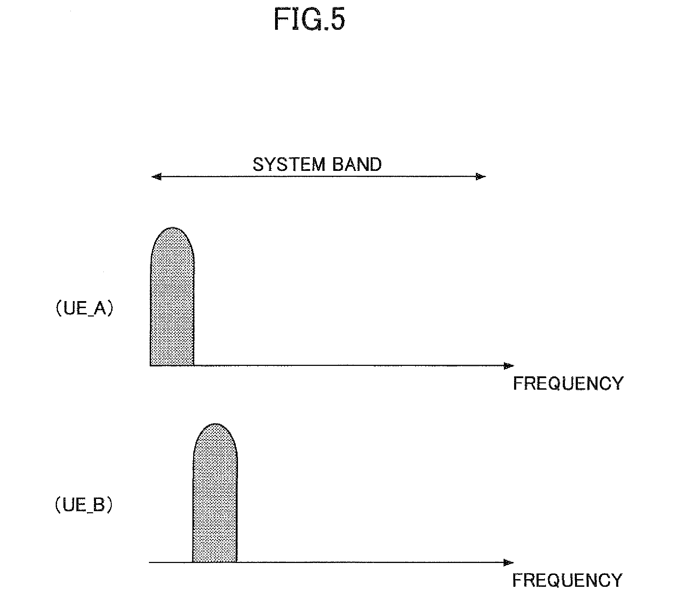

Fig. 5 shows a manner for multiplexing pilot signals of each user using the localized scheme. For example, the sounding reference signal (SRS) is transmitted using the whole band of the data channel in principle. But, as to the cell edge user, it is preferable to narrow transmission band so as to increase transmission power density. By transmitting SRS repeatedly using the narrow transmission band while changing the band, even the cell edge user can report the channel state of the whole of the transmission band to the base station with reliability although it takes time.

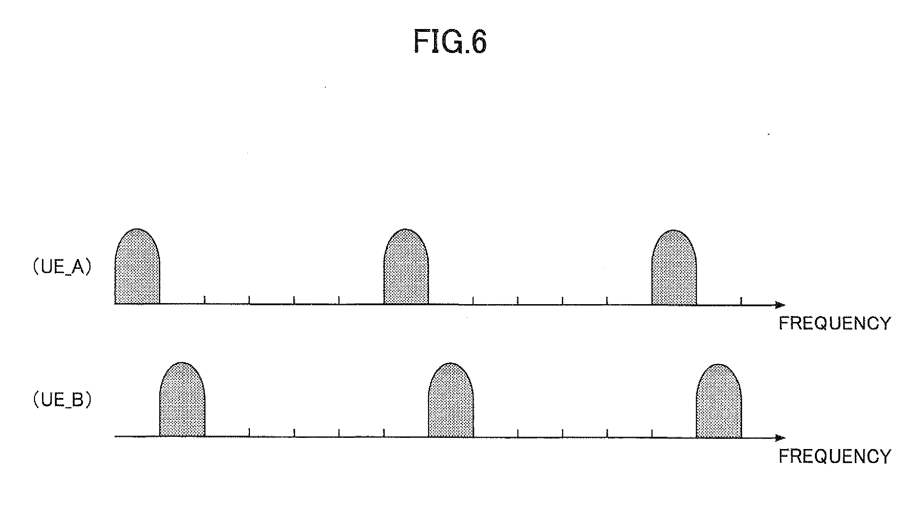

Fig. 6 shows a manner for multiplexing pilot signals of each user using the distributed scheme. In the example shown in the figure, the signal format of the transmission signal (pilot channel) is transformed such that the transmission signal has signal components distributed at equal intervals on the frequency axis. Such signal transform can be performed by a DFT-Spread OFDM using discrete Fourier transform (DFT), a Variable Spreading and Chip Repetition Factor (VSCRF-CDMA) scheme, and the like.

### <E. Operation>

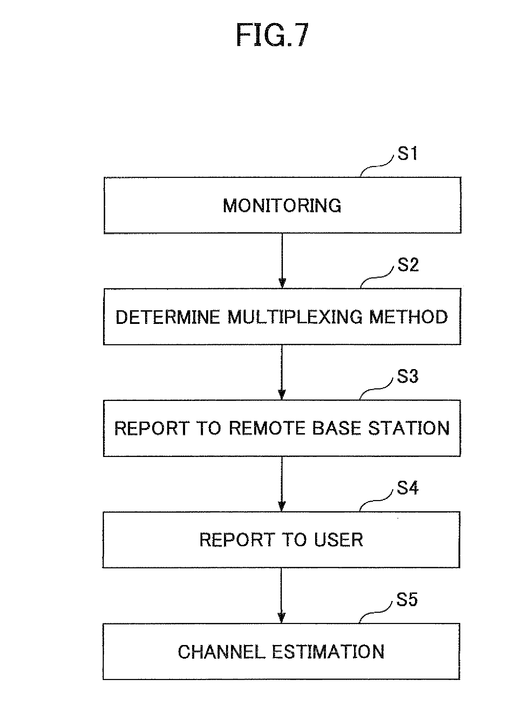

Fig. 7 is a flowchart showing an operation example according to an embodiment of the present invention. In step S1, the central base station is monitoring status of adjacent cells. The central base station receives a report of communication status from each remote base station, and according to the report, specifies one or more remote base stations. For example, one or more remote base stations of cells where throughput is not good may be specified.

In step S2, a multiplexing method is determined. The multiplexing method specifies a type of pilot channel, whether pilot channels of each user are code-division multiplexed or not, whether the pilot channels of each user are frequency-division multiplexed or not, and the like. More generally, the "multiplexing method" in this case represents "instruction contents" for the remote base station and the user apparatus.

In step S3, the determined multiplexing method is reported to the remote base station determined in step S1.

In step S4, the method specified by the multiplexing method is reported to an applicable user apparatus. The applicable user apparatus may be particularly specified by the central base station. Or, the applicable user apparatus may be particularly specified by the remote base station. In the latter case, for example, the central base station specifies the remote base station, and the remote base station may report the specified multiplexing transmission method of the pilot channel only to a cell edge user.

In step S5, the pilot channel is transmitted from the applicable user apparatus by the specified method. The pilot channel is received by the remote base station within a period of the cyclic prefix. The pilot channel does not exert large interference on cells other than the remote base station because the multiplexing method is determined such that the inter-cell interference becomes small. Therefore, by using the pilot channel transmitted in this way, channel estimation can be performed more accurately than the conventional technique.

### <F. Base station apparatus>

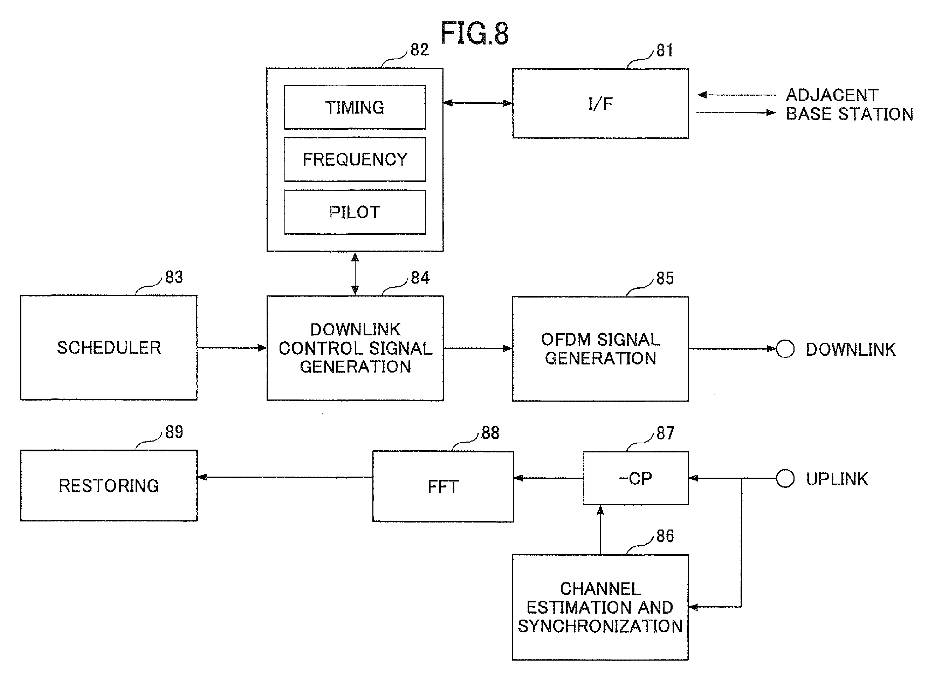

Fig. 8 shows a schematic block diagram of the central base station of an embodiment of the present invention. Fig. 8 shows an interface (I/F) 81, a management unit 82, a scheduler 83, a downlink control signal generation unit 84, an OFDM signal generation unit 85, a channel estimation and synchronization unit 86, a cyclic prefix removing unit (-CP) 87, a fast Fourier transform unit (FFT) 88, and a restoring unit 89.

The interface (I/F) 81 is an interface for communicating with all remote base stations in the base station group. Any appropriate interface may be prepared according to transmission medium between the central base station and each remote base station. As shown in Fig. 2, the transmission medium may be an optical fiber.

The management unit 82 includes a timing management unit managing timing of communication of each remote base station, a frequency management unit for managing frequency bands used at the cell edge of each remote base station, and a pilot channel management unit for managing the pilot channel transmitted by a specific multiplexing method at a specific time point. The management unit 82 prepares information corresponding to the instruction contents.

The scheduler 83 sets up an assignment plan for radio resources of the uplink and the downlink, and the scheduler 83 outputs a downlink and/or uplink scheduling grant.

The downlink control signal generation unit 84 generates a downlink control signal including the downlink and/or uplink scheduling grant.

The OFDM signal generation unit 85 generates a transmission signal including a downlink control signal. The transmission signal is generated by the OFDM scheme.

The channel estimation and synchronization unit 86 performs synchronization and channel estimation based on the pilot channel received by the uplink.

The cyclic prefix removing unit (-CP) 87 removes the cyclic prefix from the received signal according to synchronization timing.

The fast Fourier transform unit (FFT) 88 performs fast Fourier transform on the received signal to extract the signal mapped to the frequency domain.

The restoring unit 89 performs decoding and data modulation on the extracted signal to restore the transmission signal.

The present invention is not limited to the above-mentioned embodiment. The present invention may be applied to any appropriate system that uses the central base station and the remote base stations. For example, the present invention may be used with a W-CDMA system of the HSDPA/HSUPA scheme, a system of the LTE scheme, an IMT-Advanced system, a system of WiMAX, Wi-Fi scheme, and the like.

As described above, while the present invention is described with reference to specific embodiments, the respective embodiments are merely exemplary, so that a skilled person will understand variations, modifications, alternatives, and replacements. While specific numerical value examples are used to facilitate understanding of the present invention, such numerical values are merely examples, so that any appropriate value may be used unless specified otherwise. Classification into each item in the description is not essential in the present invention, and features described in equal to or more than two items may be combined and used as necessary. For convenience of explanation, while the apparatus according to the embodiments of the present invention is explained using functional block diagrams, such an apparatus as described above may be implemented in hardware, software, or a combination thereof. The present invention is not limited to the above embodiments, so that variations, modifications, alternatives, and replacements are included in the present invention without departing from the spirit of the present invention.

The present international application claims priority based on Japanese patent application No. 2008-163844, filed in the JPO on June 23, 2008, and the entire contents of the Japanese patent application No. 2008-163844 is incorporated herein by reference.

### Description of reference signs

81 interface (I/F)
82 management unit
83 scheduler
84 downlink control signal generation unit
85 OFDM signal generation unit
86 channel estimation and synchronization unit
87 cyclic prefix removing unit (-CP)
88 fast Fourier transform unit (FFT)
89 restoring unit

## Claims

1. A base station apparatus for use in a mobile communication system, comprising:
a communication unit configured to communicate with base stations of a plurality of adjacent cells;
a management unit configured to manage frequency bands for use in the adjacent cells; and
a determination unit configured to determine instruction contents according to status of use of the frequency bands,
wherein the instruction contents are reported to all or a part of the adjacent cells via the communication unit, and the instruction contents specify:
a type of a pilot channel transmitted by a user residing in an adjacent cell;
whether pilot channels of each user are code-division multiplexed or not; and
whether pilot channels of each user are frequency-division multiplexed or not.

2. The base station apparatus as claimed in claim 1, wherein the management unit manages frequency bands such that cell-edge users residing in adjacent cells use frequency bands that do not overlap with each other.

3. The base station apparatus as claimed in claim 1, wherein the pilot channel is represented by an orthogonal code sequence.

4. The base station apparatus as claimed in claim 1, wherein the pilot channel is a sounding reference signal transmitted using a band for an uplink shared data channel, a demodulation reference signal associated with the uplink shared data channel, or a reference signal transmitted using a band prepared for a control signal separately from the band for the uplink shared data channel.

5. The base station apparatus as claimed in claim 1, further comprising:
a unit configured to manage synchronization status such that, in each of the base stations of the adjacent cells, the pilot channel from the user apparatus is received within a predetermined guard interval.

6. A method for use in a base station apparatus in a mobile communication system, the base station apparatus comprising:
a communication unit configured to communicate with base stations of a plurality of adjacent cells; and
a management unit configured to manage frequency bands for use in the adjacent cells, the method comprising the steps of:
determining instruction contents according to status of use of the frequency bands; and
reporting the determined instruction contents to all or a part of the adjacent cells via the communication unit,
wherein the instruction contents specify:
a type of a pilot channel transmitted by a user residing in an adjacent cell;
whether pilot channels of each user are code-division multiplexed or not; and
whether pilot channels of each user are frequency-division multiplexed or not.
